# EUROPEAN PATENT APPLICATION

(11) **EP 4 071 002 A1**
(43) Date of publication of application: **12.10.2022**
(21) Application number: 20895149.1
(22) Date of filing: 05.10.2020
(51) Int. Cl.: B60R 21/08, B60R 21/207, B60R 21/2338

(54) **OCCUPANT RESTRAINT DEVICE**

(30) Priority: 04.12.2019 JP 2019219920
(71) Applicant: Autoliv Development AB, 44783 Vargarda (SE)
(72) Inventor: MATSUSHITA, Tetsuya, Yokohama-shi, Kanagawa 222-8580 (JP)
(74) Representative: Müller Verweyen
(86) International application number: PCT/JP2020/037761
(87) International publication number: WO 2021/111723

(57) **Abstract**

An occupant restraining device that can be reliably expanded and deployed is provided.

An airbag (3) provided on the side portion of a vehicle seat backrest portion (4) and a tensile cloth (2a) that biases the expanding and deploying airbag (3) toward an occupant (P) sitting in the vehicle seat are included. A first end (21a) of the tensile cloth (2a) is retained by an engage position of an upper part of the backrest portion (4) and a second end (22a) is retained by a prescribed location of the vehicle seat. The tensile cloth (2a) is joined to the surface of the airbag (3) using a joint portion (23a, 24a) in at least one location. With the folded airbag (3) stowed in the vehicle seat, a first distance (L1) between the engage position along the outer shape of the backrest portion (4) from this engage position to the furthermost joint portion (23a) is shorter than a second distance (L2) along the outer shape of the backrest portion (4) from the engage position to the center of rotation of the shaft (6) that movably retains the backrest portion (4).

## Description

### TECHNICAL FIELD

The present invention relates to an occupant restraining device provided with an airbag.

### BACKGROUND TECHNOLOGY

Airbag devices have become widely used in recent years. An airbag device is a safety device which is operated in case of an emergency such as a vehicle collision and, for example, expands and deploys to protect the occupant. There are various types of airbag devices depending on the installation site and application.

Patent Document 1 discloses side airbags that are provided on both sides of a vehicle seat and expand and deploy to the sides of the occupant.

### Prior Art Documents

### Patent Documents

[Patent Document 1] Japanese Unexamined Patent Application Publication No. 2014-034356

### SUMMARY OF THE INVENTION

### PROBLEM TO BE SOLVED BY THE INVENTION

Furthermore, a technique for adjusting the position of an expanding and deploying airbag using a tensile cloth is also known. With this manner of technique, when the airbag expands and deploys, the tensile cloth surrounds and retains the outside of the airbag and causes the airbag to be arranged to the side of the occupant. In addition, the tensile cloth is bonded to the airbag in advance at the place where the airbag comes into contact with the tensile cloth, stabilizing position control of the expanding and deploying airbag. The tensile cloth is stowed beforehand inside the side of the vehicle seat together with the airbag.

In this manner, since the airbag is stowed in the side of the vehicle seat with the tensile cloth connected, a problem may occur in the expansion and deployment of the airbag depending on the stowed state, such that expansion and deployment may not be the same position relative to the seated occupant and the like.
However, the technique according to Patent Document 1 as described above cannot solve such a problem.

In light of the circumstances described above, an object of the present invention is to provide an occupant restraining device where the tensile cloth for controlling the airbag, stowed together with the airbag, does not get tangled or hung up but bursts out rapidly when the airbag is expanded and deployed.

### MEANS FOR SOLVING THE PROBLEMS

An occupant restraining device according to the present invention includes:
an airbag provided on the side of a vehicle seat backrest portion, and
a tensile cloth that biases the expanding and deploying airbag toward an occupant seated in the vehicle seat, wherein
a first end of the tensile cloth is retained by an engage position of the upper portion of the backrest portion and a second end is retained at a prescribed location of the vehicle seat,
the tensile cloth is joined to the surface of the airbag in at least one joint portion location, and
with the folded airbag stowed in the vehicle seat, a first distance between the engage position along the outer shape of the backrest portion from this engage position and the furthermost joint portion is shorter than a second distance from the engage position along the outer shape of the backrest portion to the center of rotation of the shaft that movably retains the backrest portion.

### EFFECT OF THE INVENTION

According to the present invention, entanglement of the tensile cloth when adjusting the position of the expanding and deploying airbag using the tensile cloth can be prevented.

### BRIEF DESCRIPTION OF THE DRAWINGS

FIG. 1 is a diagram illustrating a state in which the occupant restraining device according to Embodiment 1 is attached to a vehicle seat.
FIG. 2 is a schematic diagram illustrating a state in which an airbag of the occupant restraining device according to Embodiment 1 is expanded and deployed.
FIG. 3 is an explanatory diagram illustrating a stowed form of a tensile cloth to the side of a seat in the occupant restraining device according to Embodiment 1.
FIG. 4 is a schematic diagram illustrating a state in which an airbag of the occupant restraining device according to Embodiment 2 is expanded and deployed.
FIG. 5 is a schematic diagram illustrating a state in which an airbag of the occupant restraining device according to Embodiment 3 is expanded and deployed.
FIG. 6 is an explanatory diagram illustrating expansion and deployment of an airbag in the occupant restraining device according to Embodiment 4.
FIG. 7 is an explanatory diagram illustrating expansion and deployment of an airbag in the occupant restraining device according to Embodiment 5.

### MODE FOR CARRYING OUT THE INVENTION

The occupant restraining device according to the embodiment of the present invention will be described in detail below according to the diagrams. The occupant restraining device according to the embodiment of the present invention is equipped to a seat of a vehicle.

### Embodiment 1

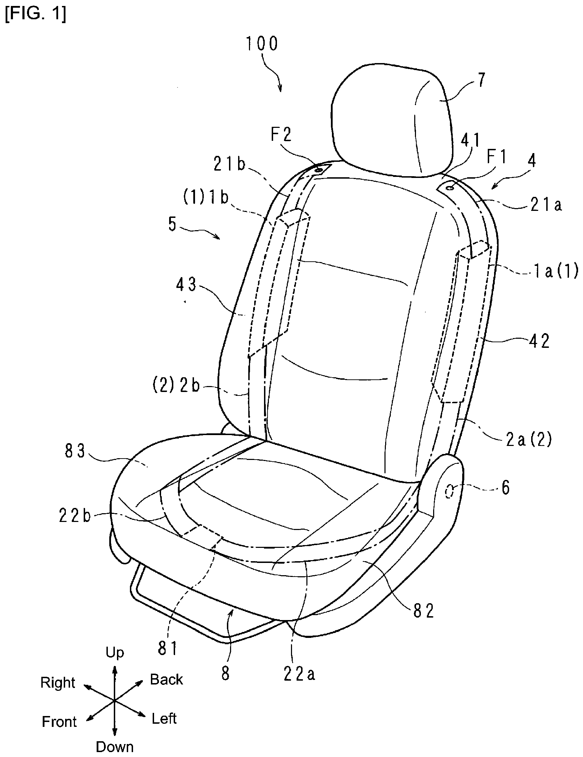

FIG. 1 is a diagram illustrating a state in which the occupant restraining device 100 according to Embodiment 1 is attached to a vehicle seat 5. FIG. 1 illustrates a state before the airbag expands and deploys.
For convenience, descriptions will be given in the following using each of the front-to-back, left-right, and up-down directions defined in the figures.

A seat 5 has a backrest portion 4 and a seat portion 8. The lower edge of the backrest portion 4 is rotatably supported on the edge of the seat portion 8 by a shaft 6 extending in the left-right direction. In other words, the shaft 6 rotatably retains the backrest portion 4, and the backrest portion 4 can rotate in the front-to-back direction around the shaft 6 as an axis.

In the following, when the occupant sits on the seat 5, the vicinity of the occupant's right arm is referred to as the right side of the seat 5, the vicinity of the occupant's left arm is referred to as the left side of the seat 5, and the occupant sits on the seat portion 8 in front of the backrest portion 4. A headrest portion 7 that supports the head of the occupant is provided in the central portion in the left-right direction on the upper portion of the backrest portion 4.

The occupant restraining device 100 includes an airbag module 1 and a tensile cloth 2. The airbag module 1 is provided on both the left and right sides of the backrest portion 4. Specifically, the airbag module 1 is stowed between an internal frame (not shown) of the backrest portion 4 and a cover covering the frame.

FIG. 1 illustrates a case where an airbag module 1b is provided on the right side portion of the backrest portion 4 and an airbag module 1a is provided on the left side portion of the backrest portion 4, but the present invention is not limited to this and the airbag module 1 may be provided on only one side.

An airbag 3 to be described later and an inflator (not shown), which receives an output signal from a sensor and discharges gas, and the like are stowed in each airbag module 1.

The airbag 3 includes, for example, the circumference of two base materials sewn together to form a bag shape, and the inflator is arranged, for example, inside the airbag module 1. The occupant restraining device 100 protects the occupants by deploying the airbag 3 in the forward direction in the event of a vehicle collision.

In FIG. 1, for convenience, the tensile cloth 2 is shown by an alternating long and short dashed line.
The tensile cloth 2 has a strip shape having a prescribed width, and at least one tensile cloth 2 is provided for one airbag 3. A tensile cloth 2a is provided on the left side of the backrest portion 4, and a tensile cloth 2b is provided on the right side of the backrest portion 4 (hereinafter, the tensile cloths 2a and 2b are also referred to as tensile cloth 2). The tensile cloth 2 is stowed in advance inside the side portion of the backrest portion 4 and inside the side portion of the seat portion 8.

With the tensile cloth 2, an upper end portion 21 is attached to the upper portion of the backrest portion 4. An upper surface 41 of the backrest portion 4 is substantially rectangular, and the headrest portion 7 is provided so as to rise from the upper surface 41. One end portion 21 of the tensile cloth 2 is retained on both left and right sides of the headrest portion 7 that is the upper surface 41 of the backrest portion 4. Specifically, a first end 21a of the tensile cloth 2a is retained on the left side of the headrest portion 7 at an engage position F1 of the frame inside the backrest portion 4, and a second end 21b of the tensile cloth 2b is retained on the right side of the headrest portion 7 at an engage position F2 inside the backrest portion 4.

The engage positions F1 and F2 are positions in the vicinity of the headrest portion 7 on the upper surface 41 of the backrest portion 4. In other words, the engage position F1 is a position in the upper surface 41 of the backrest portion 4, and is a position to the center separated by a prescribed distance from the edge with the left side surface 42 continuous with the upper surface 41 (headrest portion side). In addition, the engage position F2 is a position in the upper surface 41 of the backrest portion 4, and is a position to the center separated by a prescribed distance from the edge with the right side surface 43 continuous with the upper surface 41 (headrest portion side). Note, in the present Embodiment, the engage positions F1 and F2 are fixed positions, but the present invention is not limited to this, and the engage positions F1 and F2 may be configured so as to be movable.

On the other hand, a lower second end 22 of each tensile cloth 2 is retained by a lower securing portion 81 of the seat portion 8. In other words, a second end 22a of the left tensile cloth 2a and a second end 22b of the right tensile cloth 2b are retained by the lower securing portion 81. The lower securing portion 81 includes, for example, two metal plates, and the second end 22 of each tensile cloth 2 is sandwiched between such metal plates.

Each tensile cloth 2 is stowed inside these side portions from the backrest portion 4 to the seat portion 8. The tensile cloth 2a is stowed from the left side portion of the backrest portion 4 to the left side of the seat portion 8, and the tensile cloth 2b is stowed from the right side of the backrest 4 to the right side portion of the seat portion 8.

Specifically, the tensile cloth 2a is stowed from the engage position F1 to the left edge of the upper surface 41, and from the left side surface 42 continuous with the upper surface 41 along the left side surface 82 of the seat portion 8. The tensile cloth 2b is stowed from the engage position F2 to the right edge of the upper surface 41, and from the right side surface 43 continuous with the upper surface 41 along the right side surface 83 of the seat portion 8.

An intermediate portion of each tensile cloth 2a and 2b passes through the airbag module 1 and is joined to the airbag 3 in the airbag module 1. In other words, the airbag 3 is sewn with the tensile cloth 2 at a prescribed location at an intermediate point in the vertical direction when expanded and deployed, and is joined to the tensile cloth 2.

With the occupant restraining device 100 according to the present invention, when a vehicle collides or is heavily impacted, the airbag 3 instantly breaks the cover of the seat 5 and expands and deploys to the front of the seat 5. Further, at the same time as the expansion and deployment of the airbag 3, the tensile cloth 2 bursts out from both side portions of the seat 5 together with the airbag 3 to retain the expanding and deploying airbag 3, and enabling arranging the airbag 3 at the center of the backrest portion 4, in other words, the occupant side.

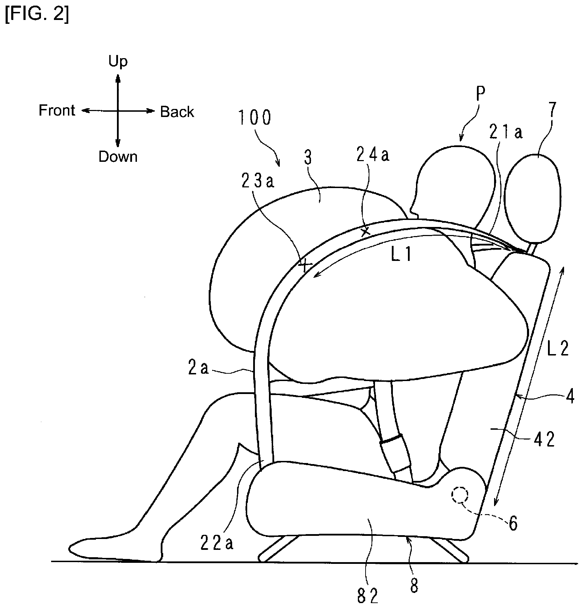

FIG. 2 is a schematic diagram illustrating a state in which an airbag 3 of the occupant restraining device 100 according to Embodiment 1 is expanded and deployed. FIG. 2 illustrates expansion and deployment of only the airbag 3 on the left side of the occupant P. However, in actuality, the airbag 3 expands and deploys on both the left and right sides of the occupant P in the same manner. Therefore, in the following, the tensile cloth 2a case will be described with reference to FIG. 2, and the description of the tensile cloth 2b will be omitted.

As illustrated in FIG. 2, when a vehicle is in a collision, the airbag 3 breaks the cover from the inside of the side surface 42 of the seat 5 and expands and deploys toward the front of the seat 5. In addition, simultaneous with the expansion and deployment of the airbag 3, the tensile cloth 2a also bursts out and surrounds the outside of the expanding and deploying airbag 3, which is then arranged on the center, in other words, where the occupant P is sitting on the seat 5, of the backrest portion 4 and holds and protects the occupant P.

Here, the tensile cloth 2a inevitably comes into partial contact with the outer surface of the airbag 3. With the occupant restraining device 100 according to Embodiment 1, a prescribed location of the contact portion between the airbag 3 and the tensile cloth 2a is sewn together to locally join the tensile cloth 2a to the airbag 3. In the example of FIG. 2, the tensile cloth 2a is sewn to the airbag 3 at two joint portions 23a and 24a indicated by an "X". With the joint portion 23a and the joint portion 24a, the joint portion 23a is arranged below the joint portion 24a. However, this is not a limitation. In the tensile cloth 2a, such a joint portion may be at one place or at three or more places.

Furthermore, with the tensile cloth 2a, the joint portion 23a and the joint portion 24a are provided at prescribed intervals, but the present invention is not limited to this. For example, the length from the joint portion 23a to the joint portion 24a may be sewn together continuously.

Note, with the occupant restraining device 100 according to Embodiment 1, the tensile cloth 2a and the airbag 3 are joined by sewing at the joint portions 23a and 24a of the tensile cloth 2a, but the present invention is not limited to this. For example, the joint portions may be secured using adhesive or secured using an appropriate hooking mechanism.

With the occupant restraining device 100, by joining the airbag 3 and the tensile cloth 2a in advance in this manner, the position of the expanding and deploying airbag 3 can be more stably adjusted.

On the other hand, due to the length thereof, the tensile cloth 2 is stowed from the side portion of the backrest portion 4 of the seat 5 to the side portion of the seat portion 8 as described above. Therefore, when the tensile cloth 2 is stowed inside the seat 5, the cloth has to be bent close to the shaft 6 (see FIG. 1).

Furthermore, conventionally, the length from the engage positions F1 and F2 of the first ends 21a and 21b of the tensile cloth 2 to the joint portion between the tensile cloth 2 and the airbag 3 is long, so the airbag 3 including this manner of joint portion was arranged passing over the shaft 6 and to the side portion of the seat portion 8.

However, in many cases, a mechanism for adjusting the angle of the backrest portion 4 and the height of the seat portion 8 is arranged on the side portion of the seat portion 8. Therefore, with the seat portion 8, securing stowing space for the tensile cloth 2 and the airbag 3 was difficult, and when the airbag 3 expanded and deployed, there was a possibility that the airbag 3 would be entangled or caught inside, and this could hinder expansion and deployment of the airbag 3.

Furthermore, the bending state of the airbag 3 to which the tensile cloth 2 is connected differs depending on the inclination angle of the backrest portion 4 in the front-to-back direction of the vehicle. Therefore, the airbag 3 can not be guaranteed to expand and deploy to the same position relative to the occupant P sitting during expansion and deployment, and thus robustness regarding expansion and deployment of the airbag 3 could not be ensured.

On the other hand, the configuration of the occupant restraining device 100 according to Embodiment 1 enables resolving this manner of problem. With the occupant restraining device 100 according to Embodiment 1, the problems described above are resolved using a configuration that optimizes the positional relationship between the engage positions F1 and F2 and the joint portions 23a and 24a of the tensile cloth 2a.

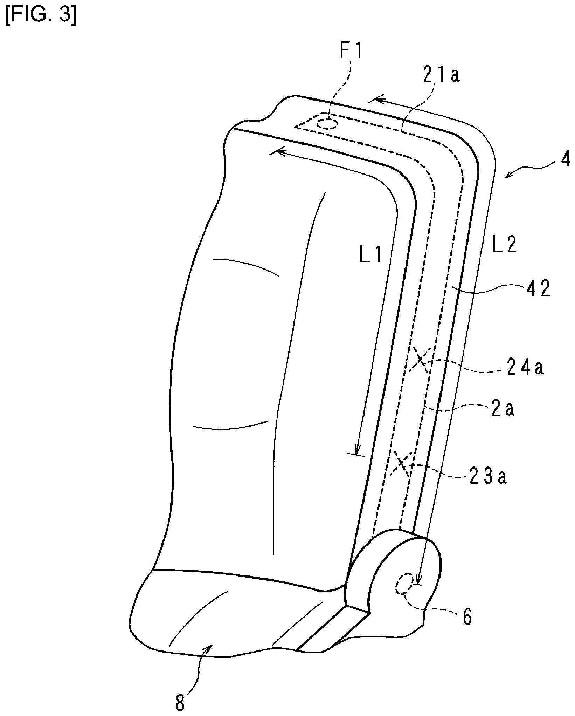

The configuration of this manner of occupant restraining device 100 will be described in detail below with reference to FIG. 2 and FIG. 3. FIG. 3 is an explanatory diagram illustrating a stowed form of a tensile cloth 2a to the side of a seat 5 in the occupant restraining device 100 according to Embodiment 1. FIG. 3 illustrates an enlarged view of only the left portion of the backrest portion 4. In actuality, the tensile cloth 2a and the tensile cloth 2b are similarly stowed on the left and right sides of the seat 5 (backrest portion 4). Therefore, in the following, for convenience of explanation, the case of the tensile cloth 2a will be described as an example, and the description of the tensile cloth 2b will be omitted.

As can be seen from FIG. 2 and FIG. 3, with the tensile cloth 2a, the distance from the engage position F1 to the furthermost portion of the joint portions 23a and 24a is such that the joint portion 23a is farther from the engage position F1 than the joint portion 24a and so is the distance L1 from the engage position F1 to the joint portion 23a (first distance). In addition, the distance from the engage position F1 to the shaft 6 is L2 (second distance). The configuration of the occupant restraining device 100 according to Embodiment 1 is such that the distance L1 is shorter than the distance L2.

In other words, when the folded airbag 3 is stowed in the seat 5, the distance L1 from the engage positions F1 and F2 along the outer shape of the backrest portion 4 to the furthermost portion is shorter than the distance L2 from the engage positions F1 and F2 along the outer shape of the backrest portion 4 to the center of rotation of the shaft 6.

When the tensile cloth 2a is stowed inside the seat 5, as illustrated in FIG. 3, the cloth is stowed from the engage position F1 over the left edge of the upper surface 41, along the side surface 42 that is continuous with the upper surface 41. With the occupant restraining device 100 according to Embodiment 1, the distance L1 is shorter than the distance L2, so the portions of the tensile cloth 2a and the airbag 3 related to the joint portions 23a and 24a can easily be arranged inside the side surface 42 of the backrest portion 4 above the shaft 6. In addition, with this manner of configuration, the portion of the airbag 3 including the joint portions 23a and 24a is not bent so as to pass around the shaft 6, enabling preventing the portion of the tensile cloth 2a and the airbag 3 related to the joint portions 23a and 24a from being stowed in a bent state.

Therefore, when the airbag 3 expands and deploys, entanglement and hooking of the portions related to the joint portions 23a and 24a joined to the airbag 3 can be dramatically suppressed, and as such, obstacles to expansion and deployment of the airbag 3 can be prevented in advance, ensuring robustness regarding expansion and deployment of the airbag 3.

In the above, the case where the tensile cloth 2a has two joint portions 23a and 24a and the joint portion 23a farthest from the engage position F1 being the furthermost portion has been described, but the present invention is not limited thereto. For example, when the joint portion with the airbag 3 is only the joint portion 23a, the furthermost portion will be the joint portion 23a. Furthermore, even if sewn from the joint portion 23a to the joint portion 24a, the furthermost portion will be the joint portion 23a.

The tensile cloth 2 is not limited to this, and may be a cloth having a wide width or a cloth having a large area. Furthermore, the tensile cloth 2 is not limited to a strip shape.

### Embodiment 2

In Embodiment 1, a case where one tensile cloth 2 is provided for each airbag 3 has been described as an example, but the present invention is not limited to this. With the occupant restraining device 100 according to Embodiment 2, two tensile cloths 2 are provided for each airbag 3.

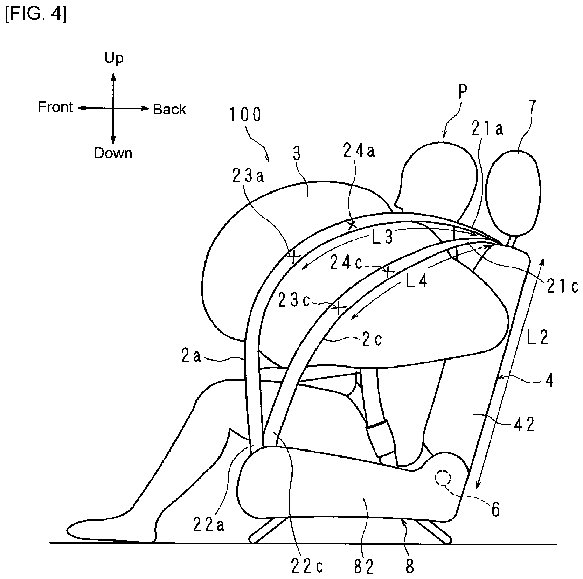

FIG. 4 is a schematic diagram illustrating a state in which an airbag 3 of the occupant restraining device 100 according to Embodiment 2 is expanded and deployed. FIG. 4 illustrates expansion and deployment of only the airbag 3 on the left side of the occupant P. In actuality, the airbag 3 expands and deploys on both the left and right sides of the occupant P in the same manner. Therefore, in the following, FIG. 4 will be used to describe only the airbag 3 to the left of the occupant P as an example.

With the occupant restraining device 100 according to Embodiment 2, the tensile cloth 2a and a tensile cloth 2c are provided for one airbag 3 on the left side. An upper first end 21a of the tensile cloth 2a and an upper first end 21c of the tensile cloth 2c are retained at the engage position F1. In addition, a lower second end 22a of the tensile cloth 2a and a lower second end 22c of the tensile cloth 2c are retained by the lower securing portion 81. The tensile cloths 2a and 2c are stowed together in the left side portion of the seat 5.

With the occupant restraining device 100 according to Embodiment 2, the tensile cloth 2a has two joint portions 23a and 24a, and the tensile cloth 2c has two joint portions 23c and 24c. Of the joint portion 23a and joint portion 24a, the joint portion 23a is positioned lower than the joint portion 24a and of the joint portion 23c and the joint portion 24c, the joint portion 23c is lower than the joint portion 24c.

With the occupant restraining device 100 according to Embodiment 2, of the joint portion 23a and joint portion 24a of the tensile cloth 2a, the distance between the joint portion 23a that is furthermost from the engage position F1 and the engage position F1 and of the joint portion 23c and the joint portion 24c of the tensile cloth 2c, and the distance between the joint portion 23c that is furthermost from the engage position F1 and the engage position F1 are shorter than the distance from the engage position F1 to the shaft 6.

In other words, with the tensile cloth 2a, the joint portion 23a is farther from the engage position F1 than the joint portion 24a so the joint portion 23a is the furthermost portion. With the tensile cloth 2c, the joint portion 23c is farther from the engage position F1 than the joint portion 24c, so the joint portion 23c is the furthermost point.

With the tensile cloth 2a, the distance from the engage position F1 to the furthermost portion of the joint portion is L3 (first distance), from the engage position F1 to the joint portion 23a. With the tensile cloth 2c, the distance from the engage position F1 to the furthermost portion of the joint portion is L4 (first distance), from the engage position F1 to the joint portion 23c. In addition, the distance from the engage position F1 to the shaft 6 is L2.

The configuration of the occupant restraining device 100 according to Embodiment 2 is such that the distance L3 and distance L4 are shorter than the distance L2.
In this manner, the distance L3 and distance L4 are shorter than the distance L2 so the portion related to the joint portions 23a and 24a of the tensile cloth 2a and airbag 3 and the portion related to the joint portions 23c and 24c of the tensile cloth 2c and airbag 3 are all positioned above the shaft 6 when stowed inside the backrest portion 4. This manner of configuration enables preventing bending of the portion of the tensile cloth 2a related to the airbag 3 and joint portions 23a and 24a and the portion of the tensile cloth 2c related to the airbag 3 and joint portions 23c and 24c to pass over the shaft 6 so that the joint portions 23a and 24a and joint portions 23c and 24c are not stowed in a bent state.

Therefore, the airbag 3 and the tensile cloths 2a and 2c can be easily stowed in the seat 5. Also, twisting inside the seat 5 and hooking of the portion of the tensile cloth 2a related to the airbag 3 and joint portions 23a and 24a and the portion of the tensile cloth 2c related to the airbag 3 and joint portions 23c and 24c when the airbag 3 expands and deploys can be substantially suppressed enabling preventing hindrance of expansion and deployment of the airbag 3 beforehand and ensuring robust expansion and deployment of the airbag 3.

In addition, in the occupant restraining device 100 according to Embodiment 2, the distance L3 from the engage position F1 of the tensile cloth 2a to the joint portion 23a is the same as the distance L4 from the engage position F1 of the tensile cloth 2c to the joint portion 23c.

Therefore, when the joint portion 23a of the tensile cloth 2a and the joint portion 23c of the tensile cloth 2c are stowed in the side portion of the backrest portion 4, they are stowed in the same position. Thus, when the airbag 3 expands and deploys, the portions of the tensile cloth 2a, the tensile cloth 2c, and the airbag 3 related to the joint portion 23a and the joint portion 23c burst forth quickly and at the same time compared to the case where the distance L3 and distance L4 are different. Therefore, the position of the airbag 3 can be adjusted more reliably.

In what has been described above, the case where two tensile cloths 2 are provided for one airbag 3 has been described as an example, but the present invention is not limited to this, and there may be three or more tensile cloths 2.

Portions similar to Embodiment 1 are given the same code and detailed description thereof is omitted.

### Embodiment 3

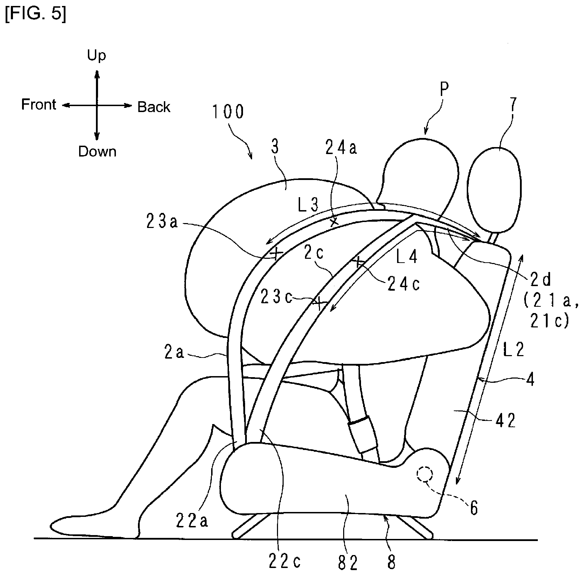

FIG. 5 is a schematic diagram illustrating a state in which an airbag 3 of the occupant restraining device 100 according to Embodiment 3 is expanded and deployed. FIG. 5 illustrates expansion and deployment of only the airbag 3 on the left side of the occupant P. In actuality, the airbag 3 expands and deploys on both the left and right sides of the occupant P in the same manner. Therefore, in the following, FIG. 5 will be used to describe only the airbag 3 to the left of the occupant P as an example.

With the occupant restraining device 100 according to Embodiment 3, the tensile cloth 2a and the tensile cloth 2c are provided for one airbag 3 on the left side. The upper first end 21a of the tensile cloth 2a and the upper first end 21c of the tensile cloth 2c are retained at the engage position F1. In addition, the lower second end 22a of the tensile cloth 2a and the lower second end 22c of the tensile cloth 2c are retained by the lower securing portion 81. The tensile cloths 2a and 2c are stowed together in the left side portion of the seat 5.

With the occupant restraining device 100 according to Embodiment 3, the tensile cloth 2a has two joint portions 23a and 24a, and the joint portion 23a is positioned below the joint portion 24a. In addition, the tensile cloth 2c has two joint portions 23c and 24c, and of the joint portion 23c and joint portion 24c, the joint portion 23c is located below the joint portion 24c.

With the occupant restraining device 100 according to Embodiment 3, the upper side of the tensile cloth 2a and the tensile cloth 2c are integrated together. In other words, the upper first end 21a of the tensile cloth 2a and the upper first end 21c of the tensile cloth 2c are sewn together over a prescribed range to form an integrated portion 2d. The integrated portion 2d is formed between the engage position F1 and the joint portion 24a of the tensile cloth 2a as well as the joint portion 24c of the tensile cloth 2c. In addition, the integrated portion 2d may be formed by using an adhesive.

The occupant restraining device 100 according to Embodiment 3 is also configured so that of the joint portions with the airbag 3 on the tensile cloths 2a and 2c, the distance between the furthermost portion from the engage position F1 and the engage position F1 is shorter than the distance from the engage position F1 to the shaft 6.

In other words, with the tensile cloth 2a, the distance from the engage position F1 to the furthermost portion of the joint portion (joint portion 23a) is L3, and with the tensile cloth 2c, the distance from the engage position F1 to the furthermost portion of the joint portion (joint portion 23c) is L4. In addition, the distance from the engage position F1 to the shaft 6 is L2. Similar to Embodiment 2, the configuration of the occupant restraining device 100 according to Embodiment 3 is such that the distance L3 and distance L4 are shorter than the distance L2.

Therefore, the portion of the tensile cloth 2a related to the joint portions 23a and 24a and the portion of the tensile cloth 2c related to the joint portions 23c and 24c are not bent to pass over the shaft 6 and the portions related to the joint portions 23a and 24a and joint portions 23c and 24c are not stowed in a bent state.

Therefore, the airbag 3 and the tensile cloths 2a and 2c can easily be stowed in the seat 5. Also, twisting inside the seat 5 and hooking of the portion of the tensile cloth 2a related to the joint portions 23a and 24a and the portion of the tensile cloth 2c related to the joint portions 23c and 24c when the airbag 3 expands and deploys can be substantially suppressed enabling preventing hindrance of expansion and deployment of the airbag 3 beforehand and ensuring robust expansion and deployment of the airbag 3.

Furthermore, with the occupant restraining device 100 according to Embodiment 3, as described above, the integrated portion 2d is formed between the upper engage position F1 and the joint portion 24a of the tensile cloth 2a as well as the joint portion 24c of the tensile cloth 2c.

Therefore, the work of stowing the tensile cloth 2a and tensile cloth 2c in the side portion of the seat 5 is simplified. In addition, when the airbag 3 expands and deploys, the tensile cloth 2a and the tensile cloth 2c both burst out enabling faster adjusting of the airbag 3 as compared to the case that the tensile cloth 2a and the tensile cloth 2c are independent and separated. Moreover, due to the integrated portion 2d, positioning of the upper joint portion 24a of the tensile cloth 2a and the joint portion 24c of the tensile cloth 2c is more reliable during expansion and deployment of the airbag 3, enabling better reliability in adjusting the position of the airbag 3.

The detailed descriptions of parts similar to those of Embodiment 1 or Embodiment 2 are omitted and the same symbols are used.

### Embodiment 4

With the occupant restraining device 100 according to Embodiment 4, two tensile cloths 2 are provided for each airbag 3, and the engage position of these tensile cloths 2 is variable.

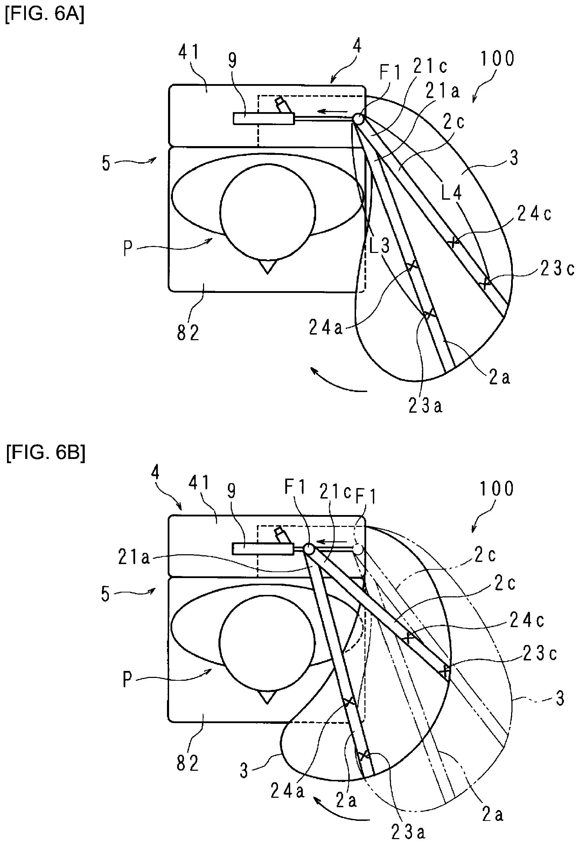

FIG. 6 is an explanatory diagram illustrating expansion and deployment of an airbag 3 in the occupant restraining device 100 according to Embodiment 4. FIG. 6A illustrates an intermediate stage of expansion and deployment of the airbag 3, and FIG. 6B illustrates the completed expansion and deployment of the airbag 3.
Note, FIG. 6 illustrates expansion and deployment of only the airbag 3 on the left side of the occupant P. In actuality, the airbag 3 expands and deploys on both the left and right sides of the occupant P in the same manner. In the following, an example of expansion and deployment of only the airbag 3 on the left side of the occupant P will be described with reference to FIG 6.

With the occupant restraining device 100 according to Embodiment 4, the tensile cloth 2a and the tensile cloth 2c are provided for one airbag 3 on the left side. The upper first end 21a of the tensile cloth 2a and the upper first end 21c of the tensile cloth 2c are retained at the engage position F1. In addition, the lower second end 22a of the tensile cloth 2a and the lower second end 22c of the tensile cloth 2c are retained by the lower securing portion 81 (see FIG. 1). Prior to expansion and deployment, the tensile cloths 2a and 2c are stowed together in the left side portion of the seat 5.

With the occupant restraining device 100 according to Embodiment 4, the tensile cloth 2a has two joint portions 23a and 24a, and the tensile cloth 2c has two joint portions 23c and 24c. Of the joint portion 23a and the joint portion 24a, the joint portion 23a is farther from the engage position F1 than the joint portion 24a, and of the joint portion 23c and the joint portion 24c, the joint portion 23c is farther from the engage position F1 than the joint portion 24c. In other words, with the tensile cloth 2a, the joint portion 23a is the furthermost portion from the engage position F1, and with the tensile cloth 2c, the joint portion 23c is the furthermost portion from the engage position F1.

Furthermore, with the occupant restraining device 100 according to Embodiment 4, the engage position F1 is configured to be movable. The details are described below.
The occupant restraining device 100 according to Embodiment 4 includes a pretensioner mechanism 9 in which tensile cloths 2a and 2c are retained at the engage position F1 and the engage position F1 is caused to move.

The pretensioner mechanism 9 is provided at the center portion in the left-right direction on the upper side of the backrest portion 4. The pretensioner mechanism 9 has a configuration similar to that of a buckle pretensioner used for pulling in a buckle of a seat belt in response to an impact. The pretensioner mechanism 9 moves the engage position F1 toward the center of the upper surface 41 of the backrest portion 4 when the airbag 3 is expanded and deployed.

Before expansion and deployment of the airbag 3, the engage position F1 is positioned at the left end portion of the upper surface 41 of the backrest portion 4. Immediately after the start of expansion and deployment, the airbag 3 is deployed at a position slightly away from the occupant P (see FIG. 6A). However, at the same time, the pretensioner mechanism 9 causes the engage position F1 to move from the left end portion of the upper surface 41 toward the center in the left-right direction. As a result, the tensile cloths 2a and 2c of which the first ends 21a and 21c that are retained by the engage position F1 are pulled toward the occupant P side (see FIG. 6B).
In this manner, the airbag 3 is biased toward the occupant P by the tensile cloths 2a and 2c, and the occupant P is reliably restrained by the airbag 3.

With the tensile cloth 2a, the distance from the engage position F1 to the furthermost portion of the joint portion is L3 (first distance), from the engage position F1 to the joint portion 23a. With the tensile cloth 2c, the distance from the engage position F1 to the furthermost portion of the joint portion is L4 (first distance), from the engage position F1 to the joint portion 23c. In addition, the distance from the engage position F1 to the shaft 6 is L2 (see FIG. 3).
The configuration of the occupant restraining device 100 according to Embodiment 4 is also such that the distance L3 and distance L4 are shorter than the distance L2.

In this manner, even when the engage position F1 moves, the distance L3 and the distance L4 are still shorter than the distance L2. Therefore, when the portion of the tensile cloth 2a related to the joint portions 23a and 24a and the airbag 3 and the portion of the tensile cloth 2c related to the joint portions 23c and 24c and the airbag 3 are stowed inside the backrest portion 4, both are positioned above the shaft 6. Therefore, the portions of the tensile cloth 2a related to the airbag 3 and the joint portions 23a and 24a and the portions of the tensile cloth 2c related to the airbag 3 and the joint portions 23c and 24c are not stowed in a state pulled over the shaft 6.

Therefore, the airbag 3 and the tensile cloths 2a and 2c can be easily stowed in the seat 5. Also, twisting inside the seat 5 and hooking of the portion of the tensile cloth 2a related to the airbag 3 and joint portions 23a and 24a and the portion of the tensile cloth 2c related to the airbag 3 and joint portions 23c and 24c when the airbag 3 expands and deploys can be substantially suppressed enabling preventing hindrance of expansion and deployment of the airbag 3 beforehand and ensuring robust expansion and deployment of the airbag 3.

Any detailed descriptions of similar parts to Embodiments 1 to 3 will be omitted, while using the same symbols.

### Embodiment 5

Similar to Embodiment 4, with the occupant restraining device 100 according to Embodiment 5, two tensile cloths 2 are provided for each airbag 3, and the engage position of these tensile cloths 2 is variable.

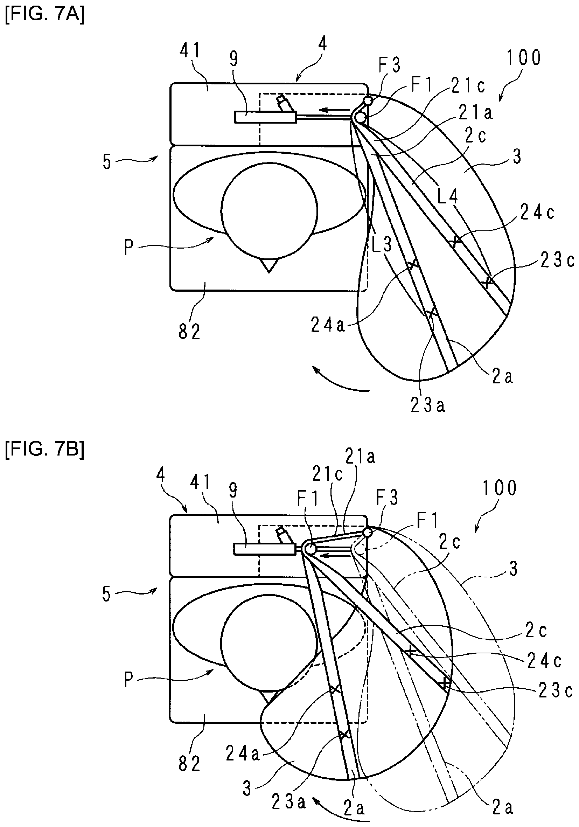

FIG. 7 is an explanatory diagram illustrating expansion and deployment of the airbag 3 in the occupant restraining device 100 according to Embodiment 5. FIG. 7A illustrates an intermediate stage of expansion and deployment of the airbag 3, and FIG. 7B illustrates the completed expansion and deployment of the airbag 3.
Note, FIG. 7 illustrates expansion and deployment of only the airbag 3 on the left side of the occupant P. In actuality, the airbag 3 expands and deploys on both the left and right sides of the occupant P in the same manner. Therefore, in the following, FIG. 7 will be used to describe only the airbag 3 to the left of the occupant P as an example.

With the occupant restraining device 100 according to Embodiment 5, the tensile cloth 2a and the tensile cloth 2c are provided for one airbag 3 on the left side. The upper first end 21a of the tensile cloth 2a and the upper first end 21c of the tensile cloth 2c are retained at a fixed position F3. The fixed position F3 is provided at the left end portion of the upper surface 41 of the backrest portion 4.
In addition, a lower second end 22a of the tensile cloth 2a and a lower second end 22c of the tensile cloth 2c are retained by the lower securing portion 81 (see FIG. 1). Prior to expansion and deployment, the tensile cloths 2a and 2c are stowed together in the left side portion of the seat 5.

Furthermore, with the occupant restraining device 100 according to Embodiment 5, the first end 21a of the tensile cloth 2a and the first end 21c of the tensile cloth 2c are engaged at the engage position F1. The engage position F1 is, for example, a shaft extending vertically, and the tensile cloths 2a and 2c are retained at the fixed position F3 via the engage position F1. The engage position F1 is configured to be movable from the left end portion of the upper surface 41 of the backrest portion 4 toward the center in the left-right direction. The tensile cloths 2a and 2c (first ends 21a and 21c) are in contact with the outer periphery of the engage position F1 on the side in the direction of movement. Prior to expansion and deployment of the airbag 3, the engage position F1 is located near the fixed position F3 on the upper surface 41 of the backrest portion 4. In other words, the engage position F1 is in the initial position at the left end portion of the upper surface 41 of the backrest portion 4.

In addition, the occupant restraining device 100 according to Embodiment 5 includes a pretensioner mechanism 9 for moving the shaft. That is, the pretensioner mechanism 9 moves the engage position F1.
The pretensioner mechanism 9 is provided at the center portion in the left-right direction on the upper side of the backrest portion 4. When the airbag 3 expands and deploys, the pretensioner mechanism 9 moves the engage position F1 (shaft) toward the center of the upper surface 41 of the backrest portion 4. The pretensioner mechanism 9 has already been described in Embodiment 4, and the description thereof will be omitted.

Immediately after expansion and deployment of the airbag 3 starts, the airbag 3 expands to a position slightly away from the occupant P (see FIG. 7A). However, the pretensioner mechanism 9 moves the engage position F1 from the initial position toward the center in the left-right direction at the same time.
On the other hand, as described above, the tensile cloths 2a and 2c (first end portions 21a and 21c) are in contact with the outer periphery of the engage position F1 on the side in the direction of movement. Therefore, the engage position F1 maintains the engaged state with the tensile cloths 2a and 2c even while moving. That is, the engage position F1 moves to the center of the upper surface 41 while pushing the tensile cloths 2a and 2c.

Therefore, when the movement of the engage position F1 is completed, the tensile cloths 2a and 2c are pulled toward the occupant P side (see FIG. 7B), and the airbag 3 is biased toward the occupant P side by the tensile cloths 2a and 2c enabling reliable restraining of the occupant P by the airbag 3.

With the occupant restraining device 100 according to Embodiment 5, the tensile cloth 2a has two joint portions 23a and 24a, and the tensile cloth 2c has two joint portions 23c and 24c. With the tensile cloth 2a, the joint portion 23a is the furthermost portion from the engage position F1, and with the tensile cloth 2c, the joint portion 23c is the furthermost portion from the engage position F1.

In other words, with the tensile cloth 2a, the distance from the engage position F1 to the furthermost portion of the joint portion is L3 (first distance), from the engage position F1 to the joint portion 23a. With the tensile cloth 2c, the distance from the engage position F1 to the furthermost portion of the joint portion is L4 (first distance), from the engage position F1 to the joint portion 23c. In addition, the distance from the engage position F1 to the shaft 6 is L2 (see FIG. 3).
The configuration of the occupant restraining device 100 according to Embodiment 5 is also such that the distance L3 and distance L4 are shorter than the distance L2.

In this manner, even when the engage position F1 moves, the distance L3 and the distance L4 are still shorter than the distance L2. Therefore, when the portion of the tensile cloth 2a related to the joint portions 23a and 24a and the airbag 3 and the portion of the tensile cloth 2c related to the joint portions 23c and 24c and the airbag 3 are stowed inside the backrest portion 4, both are positioned above the shaft 6. Therefore, the portions of the tensile cloth 2a related to the airbag 3 and the joint portions 23a and 24a and the portions of the tensile cloth 2c related to the airbag 3 and the joint portions 23c and 24c are not stowed in a state pulled over the shaft 6.

Therefore, the airbag 3 and the tensile cloths 2a and 2c can be easily stowed in the seat 5. Also, twisting inside the seat 5 and hooking of the portion of the tensile cloth 2a related to the airbag 3 and joint portions 23a and 24a and the portion of the tensile cloth 2c related to the airbag 3 and joint portions 23c and 24c when the airbag 3 expands and deploys can be substantially suppressed enabling preventing hindrance of expansion and deployment of the airbag 3 beforehand and ensuring robust expansion and deployment of the airbag 3.

Any detailed descriptions of similar parts to Embodiments 1 to 4 will be omitted, while using the same symbols.

### DESCRIPTION OF CODES

1: Airbag module
2, 2a, 2b, 2c: Tensile cloth
2d: Integrated portion
3: Airbag
4: Backrest portion
5: Seat
6: Shaft
7: Headrest portion
8: Seat portion
21a, 21b, 21c: First end
22a, 22b, 22c: Second end
23a, 24a, 23c, 24c: Joint portion
23a, 23c: Furthermost portion
41: Upper surface
42, 43: Side surface
100: Occupant restraining device
F1, F2: Engage position
L1, L3, L4.: Distance (first distance)
L2: Distance (second distance)
P: Occupant

## Claims

1. An occupant restraining device, comprising:
an airbag provided on the side of a vehicle seat backrest portion, and
a tensile cloth that biases the expanding and deploying airbag toward an occupant seated in the vehicle seat, wherein
a first end of the tensile cloth is retained by an engage position of the upper portion of the backrest portion and a second end is retained at a prescribed location of the vehicle seat,
the tensile cloth is joined to the surface of the airbag in at least one joint portion location, and
with the folded airbag stowed in the vehicle seat, a first distance between the engage position along the outer shape of the backrest portion from this engage position and the furthermost joint portion is shorter than a second distance from the engage position along the outer shape of the backrest portion to the center of rotation of the shaft that movably retains the backrest portion.

2. The occupant restraining device according to claim 1, wherein the engage position can move toward the center of the vehicle seat in the left-right direction when the airbag expands and deploys and the first distance after the engage position moves is shorter than the second distance.

3. The occupant restraining device according to claim 1 or 2, wherein a headrest portion that supports the head of the occupant is provided on the upper side of the backrest portion,
the engage position is in the vicinity of the headrest portion on the upper surface of the backrest portion, and
the tensile cloth is stowed in the backrest portion along at least a side surface continuous with the upper surface.

4. The occupant restraining device according to any one of claims 1 to 3, wherein a plurality of tensile cloths are provided for one airbag.

5. The occupant restraining device according to claim 4, wherein the plurality of tensile cloths are configured so that the first distances thereof are the same length.

6. The occupant restraining device according to claim 4 or 5, wherein two tensile cloths are provided for one airbag and the two tensile cloths have an integrated portion where the two tensile cloths are integrated between the engage position and the joint portion.

7. The occupant restraining device according to any one of claims 1 to 6, wherein the airbag and the tensile cloth are provided respectively on both left and right sides of the backrest portion.
